# EUROPÄISCHE PATENTSCHRIFT

(11) **EP 3 199 347 B1**
(45) Veröffentlichungstag und Bekanntmachung des Hinweises auf die Patenterteilung: **22.05.2019**
(21) Anmeldenummer: 16204222.0
(22) Anmeldetag: 15.12.2016
(51) Int. Cl.: B41J 2/045, B41J 2/205

(54) **ANPASSUNG DER TROPFENGRÖSSE ZUR DICHTEKOMPENSATION**
ADAPTION OF THE DROPLET SIZE FOR DENSITY COMPENSATION
ADAPTATION DE LA TAILLE DES GOUTTES POUR LA COMPENSATION DE DENSITÉ

(30) Priorität: 28.01.2016 DE 102016201245
(43) Veröffentlichungstag der Anmeldung: 02.08.2017
(73) Patentinhaber: Heidelberger Druckmaschinen AG, 69115 Heidelberg (DE)
(72) Erfinder: Trachanas, Ilias, 68309 Mannheim (DE); Junghans, Gerd, 68723 Schwetzingen (DE)

(56) Entgegenhaltungen:
- US-A1- 2006 221 125

## Beschreibung

Die vorliegende Erfindung betrifft ein Verfahren zur Veränderung von Farbdichtewerten in einem punktbasierten Drucksystem mit einem Steuerungsrechner.

Vor allem bei Druckmaschinen und Druckern, welche Inkjet-Technologie verwenden, treten beim Druck in der Farbdichte immer wieder Schwankungen auf, welche auf den Bedruckstoffen quer zur Druckrichtung zu Helligkeitsunterschieden führen. Diese Dichte-Schwankungen entstehen dadurch, dass bei den Druckköpfen häufig die Düsen herstellungsbedingt unterschiedlich große Tropfenvolumina ausstoßen. Das Problem der Dichte-Schwankungen wird im Stand der Technik durch eine Bildkorrektur vor dem Rastern der verschiedenen Farbauszüge korrigiert. So wird in der europäischen Patentanmeldung EP 1 308 279 A2 vorgeschlagen, bei Druckdüsen, welche nicht korrekt arbeiten, im Bild Farbwerte zu manipulieren, um beim Betrachter den Eindruck entstehen zu lassen, dass das Druckbild trotz teilweise defekter Düsen farblich korrekt wiedergegeben ist. Bei dem vorgeschlagenen Verfahren werden in einem ersten Schritt mittels eines Testdrucks und Testmusters die Zustände der Düsen im Druckkopf erfasst und abgespeichert. Dabei wird eine Dichteverteilung für jede Düse abgespeichert. In einer Korrektureinheit, welche vor dem Raster-Image-Prozessor angeordnet ist, werden mehrere Farbseparationen beeinflusst, um Dichteunterschiede zu kompensieren. Dieser Korrekturvorgang findet in einer Korrektureinheit statt, welche vor dem Raster-Image-Prozessor angeordnet ist. Vor dem Druckvorgang wird das Bild gerastert und dann durch Ansteuerung der Düsen gedruckt. Diese Vorgehensweise hat den Nachteil, dass bei jeder Dichtekorrektur das Bild komplett neu gerastert werden muss, was sehr zeitaufwändig ist.

Ein ähnliches Verfahren wird in der europäischen Patentanmeldung EP 1 475 233 A1 vorgeschlagen, welches als ein Kompensationsverfahren bei ungleichen Tropfenvolumina in Inkjet-Druckern eingesetzt wird. Auch bei diesem Verfahren wird für jede Düse im Druckkopf ein optischer Dichteparameter abgespeichert, mit dem das Druckbild vor dem Rastern entsprechend beeinflusst wird, so dass ungewollte optische Dichteabweichungen im Druckbild reduziert werden. Da die Korrektur vor der Rasterung des Druckbildes stattfindet, muss auch bei diesen Verfahren bei jeder Dichtekorrektur das Druckbild neu gerastert werden, was entsprechenden Zeitaufwand bedeutet.

Den gleichen Nachteil weist ein Drucker auf, welcher aus der amerikanischen Patentanmeldung US 2006/0262151 A1 bekannt ist. Auch dieses Gerät erfasst Dichte-Schwankungen mittels eines Bildsensors und korrigiert diese dadurch, dass die Dichte-Schwankungen im digitalen Druckbild vor dem Rastern von einer Korrektureinheit verändert werden. Dazu werden sogenannte Dichte-Korrektur-Koeffizienten genutzt, welche in einem Speicher abgelegt sind. Auch dieser Drucker weist den großen Nachteil auf, dass bei jeder Korrektur von Dichte-Schwankungen das Druckbild neu gerastert werden muss.

Aus der offengelegten Patentanmeldung US 2006/0221125 A1 gehen eine Vorrichtung und ein Verfahren zur Korrektur von Farbdichtewerten in einer Inkjet-Druckmaschine hervor, bei denen mittels einer Drucksteuerung und einer Signalverarbeitung die Bilddaten eines Druckauftrags für jede Farbe nach einer bekannten Methode mit einem Raster-Image-Prozessor gerastert werden, wobei die Drucksteuerung eine Korrektureinheit aufweist, mittels der bei der Rasterung Korrekturen vorgenommen werden. Diese Korrekturen wirken sich im Druckbild in einer Veränderung des Tintenvolumens aus, so dass sich die Farbdichtewerte auf dem Bedruckstoff ändern. Auch diese Vorrichtung und dieses Verfahren haben den Nachteil, dass die Korrektur beim Rastern des Druckbildes stattfindet und so bei jeder weiteren Korrektur ein erneuter zeitaufwändiger Rastervorgang erforderlich ist.

Es ist Aufgabe der vorliegenden Erfindung, ein Verfahren zur Veränderung von Farbdichtewerten in einem punktbasierten Drucksystem mit einem Steuerungsrechner zu schaffen, welches eine schnelle und flexible Korrektur von Farbdichte-Schwankungen erlaubt.

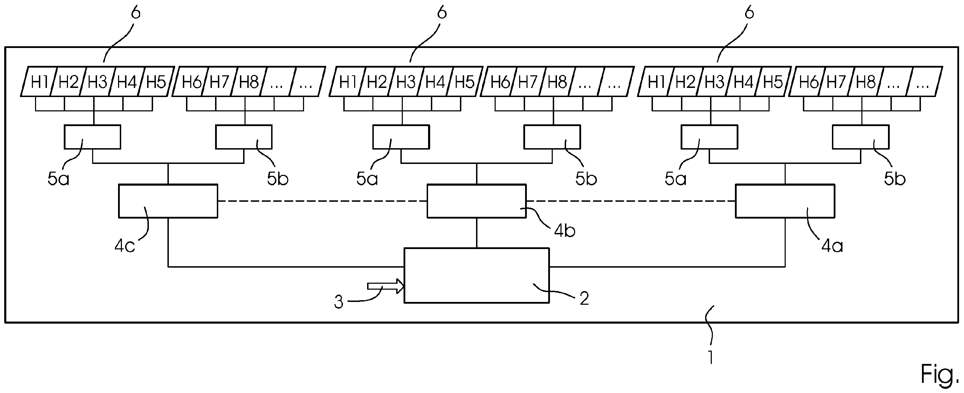

Diese Aufgabe wird erfindungsgemäß durch Patentanspruch 1 gelöst. Vorteilhafte Ausgestaltungen der Erfindung ergeben sich aus den Unteransprüchen, der Beschreibung und der Figur.

Das erfindungsgemäße Verfahren zur Veränderung von Farbdichtewerten in einem punktbasierten Drucksystem mit einem Steuerungsrechner eignet sich vor allem zur Veränderung von Farbdichtewerten in Inkjet-Druckmaschinen. Es kann aber auch bei anderen punktbasierten Drucksystemen eingesetzt werden. Bei dem erfindungsgemäßen Verfahren kommt ein Steuerungsrechner zum Einsatz, dem eine digitale Druckvorlage zugeführt wird. Weiterhin werden dem Steuerungsrechner gewünschte Veränderungen von Farbdichtewerten im Druckbild zugeleitet. Dabei kann es sich um gewollte Veränderungen von Farbdichtewerten handeln, die der Bediener vorgibt. Im Allgemeinen wird die Veränderung von Farbdichtewerten jedoch darauf hinauslaufen, dass ungewollte und bauartbedingte Schwankungen in den Farbdichtewerten ausgeglichen werden, um Helligkeitsunterschiede im Druckbild zu vermeiden. Erfindungsgemäß ist nun vorgesehen, dass die Farbdichtewerte nach der Rasterung eines Druckbildes verändert werden und zur Erreichung von vorgegebenen Soll-Farbdichtewerten Anzahl oder Größe der auf einen Bedruckstoff aufzubringenden Druckpunkte verändert werden. Durch die Veränderung der Farbdichtewerte nach der Rasterung, kann auf den zeitaufwändigen langsamen Rasterungsprozess bei der Korrektur von Farbdichtewerten verzichtet werden. Bei der vorliegenden Erfindung werden somit im Steuerungsrechner bei der Veränderung der Farbdichtewerte die bereits gerasterten Bilddaten in den einzelnen Farbauszügen verwendet, ein erneutes Rastern ist nicht erforderlich. Ausgehend von den vorhandenen Rasterwerten ist weiterhin erfindungsgemäß vorgesehen, dass Anzahl oder Größe der auf den Bedruckstoff aufzubringenden Druckpunkte verändert wird. Durch die Veränderung der Anzahl oder Größe der auf den Bedruckstoff aufzubringenden Druckpunkte verändert sich die Farbdichte und damit die Helligkeit auf dem Bedruckstoff. Damit lassen sich insbesondere unerwünschte Schwankungen in der Farbdichte einfach und schnell korrigieren, so dass Helligkeitsunterschiede auf dem Druckbild quer zur Druckrichtung nicht auftreten. Dadurch lassen sich auch Druckköpfe verwenden, welche herstellungsbedingt unterschiedlich große Tropfenvolumina abgeben. Durch den Verzicht auf das erneute Rastern wird der Druckprozess enorm beschleunigt, was die Akzeptanz von Inkjet-Druckmaschinen am Markt deutlich erhöht, da die auf dem Markt befindlichen Maschinen meist sehr lange Rüst- und Korrekturzeiten vor dem Druck in Anspruch nehmen.

In einer ersten Ausgestaltung der Erfindung ist vorgesehen, dass das punktbasierte Drucksystem eine Inkjet-Druckmaschine ist sowie wenigstens eine digitale Grafikkarte aufweist und dass die wenigstens eine digitale Grafikkarte die Größe der auf den Bedruckstoff aufzubringenden Druckpunkte durch eine Änderung der von der Inkjet-Druckmaschine abzugebenden Tropfengröße verändert. Durch die Änderung der Tropfengröße kann die Farbdichte auf dem Bedruckstoff verändert werden. Dazu wird vorzugsweise eine Solldichte festgelegt, auf die alle Düsen eingestellt werden. Somit werden alle Düsen auf eine vorgegebene Solldichte gebracht. Das Anpassen der Farbdichte geschieht dann durch Vergrößerung oder Verringerung von Tropfen im bereits gerasterten Druckbild. Dies bedeutet, dass das Raster erhalten bleibt und dass Anzahl und Position der Tropfen nicht verändert werden.

In einer bevorzugten Weiterbildung der vorliegenden Erfindung ist vorgesehen, dass die Größen der Inkjet-Tropfen in vier unterschiedlichen Größen ausgegeben werden. Dabei haben die ausgegebenen Tropfen die Größen Null (kein Tropfen), S (small), M (medium) oder L (large).

In einer weiteren Ausgestaltung der Erfindung ist vorgesehen, dass der Steuerungsrechner an eine oder mehrere Druckkopf- Ansteuerelektronikkarten zur Ansteuerung von Druckdüsen in einem oder mehreren Druckköpfen angeschlossen ist, und dass die Druckkopf- Ansteuerelektronikkarten die Änderung der Farbdichtewerte zur Ansteuerung der Druckdüsen vornehmen. Die Druckkopf- Ansteuerelektronikkarten dienen dazu, die digitalen Bildrasterdaten der Farbauszüge in Ansteuersignale zur Betätigung der Düsen im Druckkopf zu verwandeln. Da bei der vorliegenden Erfindung das gerasterte Druckbild verwendet wird, müssen die Druckkopf- Ansteuerelektronikkarten die Dichtekorrektur vornehmen, indem die digitalen Daten der gerasterten Bildwerte manipuliert werden und in der Dichte angepasst werden. Eine Druckkopf-Ansteuerelektronikkarte kann einen oder mehrere Druckköpfe ansteuern. Es können auch mehrere Druckkopf-Ansteuerelektronikkarten parallel in einer Druckeinheit eingesetzt werden.

In einer weiteren Ausgestaltung der Erfindung ist vorgesehen, dass zwischen dem Steuerungsrechner und den Druckkopf- Ansteuerelektronikkarten für eine oder mehrere Druckfarben eine oder mehrere zugeordnete digitale Grafikkarten vorgesehen sind. Die digitalen Grafikkarten erhalten die gerasterten binären Bilddaten des Steuerungsrechners und wandeln diese in entsprechende digitale Signale um, welche von den Druckkopf-Ansteuerelektronikkarten verarbeitet werden können. Dabei ist bevorzugt für jede Druckfarbe eine digitale Grafikkarte vorgesehen.

Vorteilhafterweise ist außerdem vorgesehen, dass dem Steuerungsrechner die Bilddaten eines Bildinspektionssystems zugeführt werden, welches durch das punktbasierte Drucksystem produzierte Bedruckstoffe erfasst. Das Bildinspektionssystem kann dabei im Drucksystem selbst angeordnet sein, es kann aber auch extern ausgelagert sein. Dabei werden in regelmäßigen zeitlichen Abständen und insbesondere in der Andruckphase Bedruckstoffe aus dem Drucksystem entnommen oder direkt im Drucksystem durch das Bildinspektionssystem vermessen. Die so erfassten Farb-Istwerte werden dem Steuerungsrechner zugeleitet, welcher diese mit den Farb-Sollwerten der digitalen Druckvorlage vergleicht. Bei Abweichungen in der Farbdichte werden Kompensationsstärken entsprechende Korrektursignale an die Druckkopf-Ansteuerelektronikkarten geschickt, welche die auszustoßenden Tropfen in Größe und Anzahl manipulieren, um die festgestellten Farbdichteabweichungen auszuregeln. Selbstverständlich kann auch während des gesamten Druckprozesses jederzeit ein von dem Drucksystem produzierter Bedruckstoff zur laufenden Druckqualitätskontrolle erfasst werden und der Korrekturprozess wiederholt werden. Auf diese Art und Weise kann ein geschlossener Regelkreis aufgebaut werden, welcher automatisch durch das Bildinspektionssystem erfasste Dichteabweichungen auch noch während eines laufenden Druckauftrags ausregelt. Dies erleichtert die Arbeit für den Drucker wesentlich, da die Druckqualität hinsichtlich der Farbdichte automatisch optimiert wird.

In einer weiteren Ausgestaltung der Erfindung ist vorgesehen, dass bei der Veränderung der Farbdichtewerte der auf den Bedruckstoff aufzubringenden Druckpunkte eine Korrekturfunktion zur Minimierung von Quantisierungsrauschen, insbesondere die Sigma-Delta-Modulation, angewendet wird. Die Daten des Druckbildes auf den Druckkopf-Ansteuerelektronikkarten haben eine sehr geringe Auflösung im Raster, da die Tropfengröße lediglich in den vier Stufen Null, S, M und L variieren kann. Durch diese sehr geringe Auflösung entsteht ein hohes Quantisierungsrauschen. Um die Rauschdichte innerhalb des nützlichen Frequenzspektrums der Bilddaten zu minimieren, wird erfindungsgemäß eine Korrekturfunktion verwendet. Diese unterdrückt das Rauschen. Vorzugsweise wird die Sigma-Delta-Modulation verwendet, wobei die Änderung der Bilddaten Sigma-Delta- moduliert werden. Dies bedeutet, dass eine konstante prozentuale Dichteveränderung dadurch erreicht wird, dass in den Bilddaten pro Pixel die bisherige Abweichung von dem Sollwert der Farbdichte gemessen wird, und wenn ein Schwellwert erreicht wird, dann ein Pixelwert in die richtige Richtung nach oben oder nach unten diskret verändert wird, um den abweichenden Fehler zu minimieren.

In einer weiteren Ausgestaltung der Erfindung ist vorgesehen, dass die auf den Bedruckstoff aufzubringenden Druckpunkte in Zeilen und Spalten angeordnet sind, dass das Korrekturverfahren die Sigma-Delta-Modulation ist und dass bei der Anwendung der Sigma-Delta-Modulation diese pro Bildspalte mit einem Zufallswert initialisiert wird. Die gerasterten Bilddaten sind in Zeilen und Spalten aufgeteilt, so dass jeder Bildpunkt eine Zeilen- und Spaltenadresse hat. Bei der Veränderung der Pixelwerte durch die Sigma-Delta-Modulation besteht die Gefahr, dass sich Moiré-Effekte bilden, da sich die vorgenommenen Pixelwertveränderungen am Raster orientieren. Um diese Moiré-Effekte zu vermeiden, wird die Sigma-Delta-Modulation pro Bildspalte mit einem Zufallswert initialisiert. Durch diese Zufallswerte wird die regelmäßige Moiré-Struktur aufgebrochen, so dass der Betrachter auf dem Druckbild keinen Moiré-Effekt feststellen kann.

Die vorliegende Erfindung wird nachfolgend durch eine Figur näher beschrieben und erläutert. Es zeigt:
- Die Figur:: Die Ansteuerung von Inkjet-Druckköpfen, welche zur Durchführung des erfindungsgemäßen Verfahrens geeignet ist.

Die Figur offenbart eine Inkjet-Druckmaschine 1, welche mit einem seitenbreiten Druckbarren arbeitet. Dieser Druckbarren weist hier drei Druckköpfe 6 auf, welche die Druckdüsen enthalten. In der Figur weisen die Druckköpfe 6 jeweils zehn Druckdüsen auf, wobei jeder Druckkopf 6 eine Druckfarbe auf den Bedruckstoff aufbringt. Jeder Druckkopf 6 wird dabei von zwei Druckkopf- Ansteuerelektronikkarten in Form von Inkjet-Konverterkarten 5a, 5b angesteuert. Die Inkjet-Konverterkarten 5a, 5b haben die Aufgabe, die zeitlichen Einschaltsignale der einzelnen Düsen in Steuersignale zur Ansteuerung der Druckköpfe 6 umzusetzen. Aus Gründern der Rechenkapazität sind in der Figur pro Druckkopf 6 zwei Inkjet-Konverterkarten 5a, 5b vorgesehen.

Das Drucksystem 1 weist zudem digitale Grafikkarten 4a, 4b, 4c auf, wobei eine digitale Grafikkarte jeweils einen Farbkanal verwaltet. Die digitalen Grafikkarten 4a, 4b, 4c erzeugen aus dem gerasterten Halbtonbild des vorliegenden Farbauszugs die zeitlichen Einschaltsignale der einzelnen Düsen der Druckköpfe 6. Die digitalen Grafikkarten 4a, 4b, 4c wiederum sind an einen Steuerungsrechner 2 angeschlossen, der unter anderem die binären gerasterten Bilddaten der Farbauszüge auf die digitalen Grafikkarten 4a, 4b, 4c verteilt. Der Steuerungsrechner 2 kann dabei gleichzeitig der Steuerungsrechner der gesamten Inkjet-Druckmaschine 1 sein und weitere Aufgaben übernehmen, wie die Umwandlung der digitalen Druckvorlage in die einzelnen gerasterten binären Farbauszüge. Dies bedeutet, dass der Steuerungsrechner 2 insbesondere auch den Raster-Image-Prozessor enthalten kann.

An den Steuerungsrechner 2 ist außerdem ein Bildinspektionssystem 3 angeschlossen, das innerhalb oder außerhalb der Inkjet-Druckmaschine 1 bedruckte Bedruckstoffe erfasst und digitalisiert. Auf diese Art und Weise können Ist-Farbwerte der Bedruckstoffe innerhalb oder außerhalb der Inkjet-Druckmaschine 1 erfasst und zur Qualitätskontrolle verwendet werden. Die digitalisierten Farb-Istwerte des Bildinspektionssystems 3 werden dem Steuerungsrechner 2 der Inkjet-Druckmaschine 1 zugeleitet und können zur Manipulation der Farbedichtewerte verwendet werden. Durch die Manipulation können Dichteunterschiede bedingt durch Unterschiede im Tropfenvolumen ausgeglichen werden.

Bei einem vereinfachten Modell wird zum Beispiel angenommen, dass eine Düse A ein Tropfenvolumen von 2,2 Picoliter hat, und eine Düse B ein Tropfenvolumen von 2 Picoliter. Um die Farbdichte anzupassen, müssen in diesem vereinfachten Modell die Tropfenvolumina angepasst werden. Zum Beispiel wird dazu das Tropfenvolumen von Düse B bei einer Flächendeckung von 30% um 10% erhöht. Die Erhöhung des Tropfenvolumens wird dadurch erreicht, dass bei vorhandenen Rasterpunkten die Tropfengröße statistisch erhöht wird. In dem genannten Beispiel können dazu von 100 Tropfen in der Größe S, welche 200 Picoliter und damit 2 Picoliter pro Tropfen entsprechen, zehn Tropfen in Tropfen der Größe M umgewandelt werden, um das Tropfenvolumen für 100 Tropfen auf 220 Picoliter zu erhöhen. Ein M Tropfen entspricht dabei 4 Picolitern. Dadurch wird das durchschnittliche Volumen eines Tropfens auf 2,2 Picoliter angehoben. Entsprechend umgekehrt durch Wahl kleinerer Tropfen funktioniert die Methode für die Aufhellung einer Düse im Druckkopf 6.

Die Düsen in den Druckköpfen 6 werden bevorzugt mittels Piezoelementen angesteuert, welche mit Hilfe einer elektrischen Spannung Druck auf eine mit Tinte gefüllte Kammer aufbauen und so einen Tropfen erzeugen, der die Düsenöffnung verlässt. Diese Signale werden von den Inkjet-Konverterkarten 5a, 5b erzeugt. Dabei wandelt eine Inkjet-Konverterkarte 5a, 5b ein digitales Zwei-Bit-Signal in ein analoges Ansteuersignal des Piezoelements der Düse um. Das analoge Ansteuersignal besteht aus einem oder mehreren Spannungsverläufen, sogenannten Wave-Formen. Eine einzelne Düse kann so typischerweise Tropfen zwischen 2 und 20 Picoliter abgeben.

Der Steuerungsrechner 2 kann die Bilder des Bildinspektionssystems 3 auswerten und daraus Kompensationsstärken zur Angleichung von Farbdichte-Schwankungen berechnen. Diese Kompensationsstärken werden vom Steuerungsrechner 2 an die der jeweiligen Druckfarbe zugeordneten Inkjet-Konverterkarten 5a, 5b übermittelt. Dabei wird bevorzugt eine Kompensationsstärke pro Düse bzw. der Bildspalte übermittelt. Auf diese Art und Weise wird die Ausgabe der Tropfen direkt auf der Inkjet-Konverterkarte 5a, 5b manipuliert, ohne dass im Steuerungsrechner 2 neue Farbauszüge im Image-Raster-Prozessor hergestellt werden müssen. Denn die Hauptidee der vorliegenden Erfindung besteht darin, die Daten auf den Inkjet-Konverterkarten 5a, 5b zu manipulieren, um eine stochastische Erhöhung oder Verringerung der Farbdichte zu erzielen.

Da die Daten auf einer Inkjet-Konverterkarte 5a, 5b eine sehr geringe Auflösung haben, da lediglich Tropfen in den vier Größen Null, S, M oder L abgegeben werden können, entsteht dabei ein hohes Quantisierungsrauschen. Zur Reduktion der Rauschdichte innerhalb des nützlichen Frequenzspektrums der Bilddaten wird dabei auf der Inkjet-Konverterkarte 5a, 5b die Sigma-Delta-Modulation verwendet. Dabei wird die Änderung der Bilddaten in Form von Pixelwerten Sigma-Delta-moduliert. Das bedeutet, dass eine konstante prozentuale Farbdichteveränderung dadurch erreicht wird, dass pro Pixel die bisherige Abweichung von dem Sollwert der Farbdichte gemessen wird und bei Erreichung eines Schwellwertes dann ein Pixelwert in die richtige Richtung nach oben oder unten diskret verändert wird, um den Abweichungsfehler zu minimieren. Dadurch entsteht eine Folge von Pixelwertveränderungen, die im Mittel die gewünschte Dichteveränderung ergeben. Die vorgenommenen Pixelwertveränderungen orientieren sich dabei am Raster, was zu Moiré-Effekten führen kann. Um diese Moiré-Effekte zu vermeiden, wird die Sigma-Delta-Modulation pro Bildspalte mit einem Zufallswert initialisiert, so dass sich keine Moiré-Muster ausbilden können und der Moiré-Effekt für den Betrachter nicht sichtbar wird.

Durch das erfindungsgemäße Verfahren müssen bei einer Dichtekorrektur die digitalen Grafikkarten 4a, 4b, 4c und der Steuerungsrechner 2 keine neuen gerasterten Druckbilder produzieren oder verarbeiten. Es reicht aus, wenn der Steuerungsrechner 2 Kompensationsstärken pro Düse berechnet und diese direkt an die Inkjet-Konverterkarten 5a, 5b zur Angleichung der Farbdichte weiterleitet.

Falls die festgestellten Farbdichteabweichungen jedoch mit der Manipulation auf den Inkjet-Konverterkarten 5a, 5b im Ausnahmefall nicht oder nicht ausreichend kompensiert werden können, dann kann zusätzlich eine Korrektur der Farbdichtewerte durch erneutes Rastern im Steuerungsrechner 2 erfolgen.

### Bezugszeichenliste

- 1: Inkjet-Druckmaschine
- 2: Steuerungsrechner
- 3: Bildinspektionssystem
- 4a, 4b, 4c: Digitale Grafikkarte
- 5a, 5b: Inkjet-Konverterkarte
- 6: Druckkopf mit Druckdüsen

## Patentansprüche

1. Verfahren zur Veränderung von Farbdichtewerten in einem punktbasierten Drucksystem (1) mit einem Steuerungsrechner (2),
**dadurch gekennzeichnet,**
**dass** der Steuerungsrechner (2) die Veränderung der Farbdichtewerte nach der Rasterung eines Druckbildes ohne ein erneutes Rastern vornimmt, dass im Steuerungsrechner (2) bei der Veränderung der Farbdichtewerte die bereits gerasterten Bilddaten in den einzelnen Farbauszügen verwendet werden und dass zur Erreichung von vorgegebenen Sollfarbdichtewerten Anzahl und/oder Größe der auf einen Bedruckstoff aufzubringenden Druckpunkte verändert.

2. Verfahren nach Anspruch 1,
**dadurch gekennzeichnet,**
**dass** der Steuerungsrechner (2) durch die Veränderung der Anzahl oder der Größe der auf den Bedruckstoff aufzubringenden Bildpunkte Schwankungen in der Farbdichte korrigiert.

3. Verfahren nach Anspruch 1 oder 2,
**dadurch gekennzeichnet,**
**dass** das punktbasierte Drucksystem eine Inkjet-Druckmaschine (1) ist sowie wenigstens eine digitale Grafikkarte (4a, 4b, 4c) aufweist und dass die wenigstens eine digitale Grafikkarte (4a, 4b, 4c) die Größe der auf den Bedruckstoff aufzubringenden Druckpunkte durch eine Änderung der von der Inkjet-Druckmaschine (1) abzugebenden Tropfengröße verändert.

4. Verfahren nach Anspruch 3,
**dadurch gekennzeichnet,**
**dass** die Größen der Inkjet-Topfen in vier unterschiedlichen Größen ausgegeben werden.

5. Verfahren nach einem der vorhergehenden Ansprüche,
**dadurch gekennzeichnet,**
**dass** der Steuerungsrechner (2) an eine oder mehrere Druckkopf-Ansteuerelektronikkarten (5a, 5b) zur Ansteuerung von Druckdüsen in einem oder mehreren Druckköpfen (6) angeschlossen ist, und dass die Druckkopf-Ansteuerelektronikkarten (5a, 5b) die Änderungen der Farbdichtewerte zur Ansteuerung der Druckdüsen vornehmen.

6. Verfahren nach Anspruch 5,
**dadurch gekennzeichnet,**
**dass** zwischen dem Steuerungsrechner (2) und den Druckkopf-Ansteuerelektronikkarten (5a, 5b) für eine oder mehrere Druckfarben ein oder mehrere zugeordnete digitale Grafikkarten (4a, 4b, 4c) vorgesehen sind.

7. Verfahren nach Anspruch 6,
**dadurch gekennzeichnet,**
**dass** für jede Druckfarbe eine digitale Grafikkarte (4a, 4b, 4c) vorgesehen ist und dass jede digitale Grafikkarte (4a, 4b, 4c) die Verarbeitung einer oder mehrerer Druckfarben steuert.

8. Verfahren nach einem der vorhergehenden Ansprüche,
**dadurch gekennzeichnet,**
**dass** dem Steuerungsrechner (2) die Bilddaten eines Bildinspektionssystems (3) zugeführt werden, welches durch das punktbasierte Drucksystem (1) produzierte Bedruckstoffe erfasst.

9. Verfahren nach einem der vorhergehenden Ansprüche,
**dadurch gekennzeichnet,**
**dass** bei der Veränderung der Farbdichtewerte der auf den Bedruckstoff aufzubringenden Druckpunkte eine Korrekturfunktion zur Minimierung von Quantisierungsrauschen, insbesondere die Sigma-Delta-Modulation, angewendet wird.

10. Verfahren nach Anspruch 9,
**dadurch gekennzeichnet,**
**dass** die auf den Bedruckstoff aufzubringenden Druckpunkte in Zeilen und Spalten angeordnet sind, dass das Korrekturverfahren die Sigma-Delta-Modulation ist, und dass bei der Anwendung der Sigma-Delta-Modulation diese pro Bildspalte mit einem Zufallswert initialisiert wird.

## Claims

1. Method for modifying color density values in a dot-based printing system (1) with a control unit (2),
**characterized**
**in that** the control unit (2) implements the modification of the color density values after the screening of an image without rescreening,
**in that** for the modification of the color density values, the control unit (2) uses the already-screened image data in the individual color separations,
and **in that** to attain predefined target color density values, the number and/or size of the print dots to be applied to a printing material are modified.

2. Method according to claim 1,
**characterized**
**in that** the control unit (2) corrects color density fluctuations by the modification of the number or size of the image dots to be applied to the printing material.

3. Method according to claim 1 or 2,
**characterized**
**in that** the dot-based printing system is an inkjet printing machine (1) and includes at least one digital graphics card (4a, 4b, 4c) and the at least one digital graphics card (4a, 4b, 4c) modifies the size of the print dots to be applied to the printing material by modifying the drop size to be emitted by the inkjet printing machine (1).

4. Method according to claim 3,
**characterized**
**in that** the sizes of the inkjet drops are emitted in four different sizes.

5. Method according to any one of the preceding claims,
**characterized**
**in that** the control unit (2) is connected to one or more print head actuation electronics cards (5a, 5b) for actuating printing nozzles in one or more print heads (6) and the print head actuation electronics cards (5a, 5b) carry out the modifications of the color density values to actuate the printing nozzles.

6. Method according to claim 5,
**characterized**
**in that** for one or more print colors, one or more associated digital graphics cards (4a, 4b, 4c) are provided between the control unit (2) and the print head actuation electronics cards (5a, 5b).

7. Method according to claim 6,
**characterized**
**in that** a digital graphics card (4a, 4b, 4c) is provided for every print color and every digital graphics card (4a, 4b, 4c) controls the processing of one or more print colors.

8. Method according to any one of the preceding claims,
**characterized**
**in that** the control unit (2) is provided with the image data of an image inspection system (3) that scans printing materials that have been produced by the dot-based printing system.

9. The method recited in any one of the preceding claims,
**characterized**
**in that** to minimize quantization noise, a correcting function, in particular sigma-delta modulation, is used in the modification of the color density values of the print dots to be applied to the printing material.

10. Method according to claim 9,
**characterized**
**in that** the print dots to be applied to the printing material are arranged in rows and columns, the correcting method is sigma-delta modulation, and when the sigma-delta modulation is applied, the latter is initialized with a random value per image column.

## Revendications

1. Procédé pour la modification de valeurs de densité d'encre dans un système d'impression (1) à base de points avec un ordinateur de pilotage (2),
**caractérisé en ce**
**que** l'ordinateur de pilotage (2) procède à la modification des valeurs de densité d'encre après le tramage d'une image imprimée sans nouveau tramage, que les données d'image déjà tramées dans les différentes sélections chromatiques sont utilisées dans l'ordinateur de pilotage (2) lors de la modification des valeurs de densité d'encre et qu'en vue de réaliser des valeurs de densité d'encre de consigne prescrites, il y a modification du nombre et/ou de la taille des points d'impression à appliquer sur un support d'impression.

2. Procédé selon la revendication 1,
**caractérisé en ce**
**que** l'ordinateur de pilotage (2) corrige par la modification du nombre ou de la taille des points d'image à appliquer sur le support d'impression des variations dans la densité d'encre.

3. Procédé selon la revendication 1 ou 2,
**caractérisé en ce**
**que** le système d'impression basé sur des points est une machine à imprimer à jet d'encre (1) et présente au moins une carte graphique numérique (4a, 4b, 4c) et que la carte graphique numérique (4a, 4b, 4c) au moins modifie la taille des points d'impression à appliquer sur le support d'impression par une modification de la taille de gouttes devant être délivrées par la machine à imprimer à jet d'encre (1).

4. Procédé selon la revendication 3,
**caractérisé en ce**
**que** les gouttes de jet d'encre sont délivrées dans des quatre tailles différentes.

5. Procédé selon l'une des revendications précédentes,
**caractérisé en ce**
**que** l'ordinateur de pilotage (2) est connecté à une ou plusieurs cartes d'électronique de commande de tête d'impression (5a, 5b) pour le pilotage de buses d'impression dans une ou plusieurs têtes d'impression (6) et que les cartes d'électronique de commande (5a, 5b) de la tête d'impression procèdent aux modifications des valeurs de densité d'encre des buses d'impression.

6. Procédé selon la revendication 5,
**caractérisé en ce**
**qu'**une ou plusieurs cartes graphiques numériques (4a, 4b, 4c) assignées sont prévues entre l'ordinateur de pilotage (2) et les cartes d'électronique de commande (5a, 5b) de la tête d'impression pour une ou plusieurs couleurs imprimées .

7. Procédé selon la revendication 6,
**caractérisé en ce**
**qu'**une carte graphique numérique (4a, 4b, 4c) est prévue pour chaque encre d'impression et que chaque carte graphique numérique (4a, 4b, 4c) commande le traitement d'une ou plusieurs couleurs imprimées.

8. Procédé selon l'une des revendications précédentes,
**caractérisé en ce**
**qu'**il y a fourniture à l'ordinateur de pilotage (2) des données images d'un système d'inspection de l'image (3), qui couvre les supports d'impression produits via le système d'impression (1) à base de points.

9. Procédé selon l'une des revendications précédentes,
**caractérisé en ce**
**que**, lors de la modification des valeurs de densité d'encre des points d'impression à appliquer sur le support d'impression, il y a utilisation d'une fonction de correction en vue de la diminution du bruit de quantification, notamment de la modulation sigma-delta.

10. Procédé selon la revendication 9,
**caractérisé en ce**
**que** les points d'impression à appliquer sur le support d'impression sont organisés en lignes et colonnes, que le procédé de correction est la modulation sigma-delta et que, lors de l'application de la modulation sigma-delta, celle-ci est, pour chaque colonne d'image, initialisée avec une valeur aléatoire.
